(19) Europäisches Patentamt
European Patent Office
Office européen des brevets

(11) Veröffentlichungsnummer: **0 373 116**
**A2**

(12) # EUROPÄISCHE PATENTANMELDUNG

(21) Anmeldenummer: **89810909.5**

(22) Anmeldetag: **28.11.89**

(51) Int. Cl.5: **C08L 67/00, C08G 63/66, C08K 3/24, H01M 6/18, C09K 3/16**

(30) Priorität: **06.12.88 CH 4512/88**

(43) Veröffentlichungstag der Anmeldung: **13.06.90 Patentblatt 90/24**

(84) Benannte Vertragsstaaten: **CH DE FR GB IT LI NL**

(71) Anmelder: **CIBA-GEIGY AG**
**Klybeckstrasse 141**
**CH-4002 Basel(CH)**

(72) Erfinder: **Tieke, Bernd, Dr.**
**Bischof Neumann Strasse 4**
**D-8753 Obernburg(DE)**

(54) **Ionenleitende Zusammensetzungen und deren Verwendung.**

(57) Ionenleitende Zusammensetzungen enthaltend

(A) ein Polyester-Polyether-Copolymer hergestellt aus

(1.1) einem α,ω-dihydroxyterminierten Poly(oxyalkylen),

(1.2) einer aromatischen Dicarbonsäure oder deren esterbildenden Derivaten und

(1.3) einem aromatischen Diol oder einer aromatischen Hydroxycarbonsäure oder deren esterbildenden Derivaten oder einem Gemisch dieser Verbindungen oder hergestellt aus

(2.1) einem α,ω-dicarboxyterminierten Poly(oxyalkylen) oder dessen esterbildenden Derivaten,

(2.2) einem aromatischen Diol und

(2.3) einer aromatischen Dicarbonsäure, einer aromatischen Hydroxycarbonsäure oder deren esterbildenden Derivaten oder einem Gemisch dieser Verbindungen und

(B) ein Salz eines ein- bis dreiwertigen Metallions der Gruppen Ia bis IVa, Ib bis VIIb oder VIII, eignen sich insbesondere für die Herstellung von antistatischen Folien, antistatisch wirksamen Beschichtungen oder als Feststoffelektrolyte für Batterien. Die Polyester-Polyether-Copolymere (A) sind zum Teil neu und die neuen Copolymere werden ebenfalls beansprucht.

EP 0 373 116 A2

## Ionenleitende Zusammensetzungen und deren Verwendung

Gegenstand der Erfindung sind ionenleitende Zusammensetzungen enthaltend spezielle Polyester-Polyether-Copolymere und ein Salz eines ein- bis dreiwertigen Metallions der Gruppen Ia bis IVa oder Ib bis VIIb oder VIII, deren Verwendung, insbesondere zur Herstellung von antistatischen Folien, antistatisch wirksamen Beschichtungen oder als Feststoffelektrolyte für Batterien, sowie bestimmte neue PolyesterPolyether-Copolymere.

Ionenleitende Zusammensetzungen, welche ein oligomeres oder polymeres Material und ein Elektrolytsalz enthalten, sind bekannt. Zur Komplexierung der Elektrolytsalze wurden bereits diverse Polymere, wie z.B. Polyethylenoxid, Polymere mit Polyethylenoxid-Seitenketten, Polysäure-Polyvinylalkohol-Polymere oder Netzwerke mit Polyethylenoxidketten, verwendet. Die erwähnten Polymere sind mechanisch wenig beanspruchbar und eignen sich nicht zur Herstellung von selbsttragenden Folien.

Auch einige polyetherhaltige Copolyester sind bereits für die Komplexierung von Elektrolytsalzen eingesetzt worden.

Die FR-A 2 493 609 beschreibt Zusammensetzungen enthaltend ein Elektrolytsalz, vorzugsweise Lithiumperchlorat, und einen elastomeren Copolyester hergestellt durch Umsetzung von Dimethylterephthalat mit einem Polyglykol und einem Diol. Bevorzugte Polyglykole sind Polytetramethylenglykol, Polyethylenglykol und Polypropylenglykol. Als Diole werden Butandiol und Ethylenglykol bevorzugt. Die Zusammensetzungen werden als Feststoffelektrolyte eingesetzt.

Die JP-0S Sho 60-148 003/85 beschreibt ionenleitende organische Feststoffelektrolyte enthaltend mindestens ein Metallsalz der Gruppe I oder II und eine hochmolekulare Verbindung mit einem Durchschnittsmolekulargewicht von mindestens 50 000, erhalten durch Umsetzung eines Polyalkylenglykols mit einem Durchschnittsmolekulargewicht von mindestens 5000 und einem Gehalt an Ethylenoxideinheiten von mindestens 70 Gew. %, mit einer mehrwertigen Carbonsäure, deren Anhydrid oder deren Niederalkylester.

Gegenstand vorliegender Erfindung sind ionenleitende Zusammensetzungen enthaltend

(A) ein Polyester-Polyether-Copolymer hergestellt aus

(1.1) einem $\alpha,\omega$-dihydroxyterminierten Poly(oxyalkylen),

(1.2) einer aromatischen Dicarbonsäure oder deren esterbildenden Derivaten und

(1.3) einem aromatischen Diol oder einer aromatischen Hydroxycarbonsäure oder deren esterbildenden Derivaten oder einem Gemisch dieser Verbindungen oder hergestellt aus

(2.1) einem $\alpha,\omega$-dicarboxyterminierten Poly(oxyalkylen) oder dessen esterbildenden Derivaten,

(2.2) einem aromatischen Diol und

(2.3) einer aromatischen Dicarbonsäure, einer aromatischen Hydroxycarbonsäure oder deren esterbildenden Derivaten oder einem Gemisch dieser Verbindungen und

(B) ein Salz eines ein- bis dreiwertigen Metallions der Gruppen Ia bis IVa, Ib bis VIIb oder VIII.

Die Bezeichnungen der Gruppen Ia bis IVa, Ib bis VIIb oder VIII der Metallsalze (B) beziehen sich auf das Periodensystem gemäss Merck Index, 9th Edition, 1976.

Die erfindungsgemässen ionenleitenden Zusammensetzungen, d.h. die Polymer-Elektrolytsalz-Komplexe sind in herkömmlichen Lösungsmitteln gut löslich und lassen sich ohne Probleme zu selbsttragenden Folien oder zu Beschichtungen verarbeiten. Die Folien sind im sichtbaren Spektralbereich transparent, haben eine ionische Leitfähigkeit von bis zu $10^{-6}$S $cm^{-1}$ bei 20° C und lassen sich durch Aenderung ihrer Zusammensetzung in ihren thermischen und mechanischen Eigenschaften breit variieren. Die erfindungsgemässen ionenleitenden Zusammensetzungen weisen bessere mechanische Eigenschaften auf als die vorbekannten organischen Feststoffelektrolyte. Bei den vorliegenden Polyester-Polyether-Copolymeren tritt überraschenderweise keine Phasentrennung bzw. Entmischung der aromatischen Polyesteranteile und der Poly(oxyalkylen)-Blöcke auf. Die Copolymere sind homogen, amorph und weisen nur einen einzigen Glasübergang auf.

Anhand ihrer vorzüglicher Eigenschaften eignen sich die Zusammensetzungen inbesondere für die Herstellung von antistatischen Folien, antistatisch wirksamen Beschichtungen oder als Feststoffelektrolyte für Batterien. Gegenstand vorliegender Erfindung ist somit auch die Verwendung der erfindungsgemässen Zusammensetzungen für die erwähnten Anwendungsbereiche.

Bevorzugt werden Zusammensetzungen, worin die Mengen der Komponenten (1.1) bis (1.3) so gewählt werden, dass 5 - 95, vorzugsweise 10 - 90, besonders bevorzugt 25 - 75 % der OH-Gruppen von der Komponente (1.1) und die restlichen OH-Gruppen von der Komponente (1.3) stammen, sowie Zusammensetzungen, worin die Mengen der Komponenten (2.1) bis (2.3) so gewählt werden, dass 5 - 95, vorzugsweise 10 - 90, besonders bevorzugt 25 - 75 % der COOH-Gruppen von der Komponente (2.1) und die restlichen COOH-Gruppen von der Komponente (2.3) stammen.

Die Poly(oxyalkylen)e (1.1) oder (2.1) weisen vorzugsweise 2 - 8, insbesondere 2 - 4 C-Atome pro Alkylengruppe auf und sind insbesondere von einem Polyethylenglykol, einem Polypropylenglykol oder einem Polytetrahydrofuran abgeleitet. Es kann sich dabei sowohl um Homo- als auch um Copolymere handeln, wobei die letzteren statistisch oder sequentiell (als Blockpolymere) aufgebaut sein können. Homopolymere werden bevorzugt.

Als Komponente (1.1) werden Verbindungen der Formel I besonders bevorzugt und als Komponente (2.1) werden Verbindungen der Formel II besonders bevorzugt

$HO(CH_2CH_2O)_{n}H$ (I),

$HOOC(CH_2OCH_2)_{m}COOH$ (II),

worin m und n eine ganze Zahl von 2 bis 200, vorzugsweise 3 bis 20, besonders bevorzugt 3 bis 15, bedeuten. Verbindungen der Formel II können auch dargestellt werden als

$HOOCCH_2O(CH_2CH_2O)_{m-1}CH_2COOH$.

Werden aromatische Diole als Komponente (1.3) oder (2.2) der erfindungsgemässen Zusammensetzungen verwendet, so sind dies vorzugsweise Verbindungen der Formel III

$HO\text{-}R_A\text{-}OH$ (III),

worin $R_A$ für einen zweiwertigen ein- oder zweikernigen aromatischen Rest mit 6 bis 10 C-Atomen steht, der gegebenenfalls durch Halogenatome, $C_1$-$C_4$-Alkylgruppen, Phenyl, $C_1$-$C_4$-Alkylphenyl oder Halogenphenyl substituiert ist, oder eine Gruppe der Formel IV darstellt

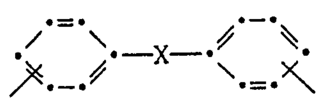

(IV),

worin X eine direkte Bindung, Methylen, Isopropyliden, O, CO, S, $SO_2$, $CH=CR^1$, $C\equiv C$, $N=N$,

$N\overset{\overset{O}{\uparrow}}{=}N$, $CH=CH-\underset{\underset{O}{\|}}{C}$ oder $CH=CH-\underset{\underset{O}{\|}}{C}-CH=CH$

bedeutet, und $R^1$ für Wasserstoff, Halogen oder $C_1$-$C_4$-Alkyl steht.

Beispiele geeigneter $C_1$-$C_4$-Alkylgruppen sind Methyl, Ethyl, n- und i-Propyl, n-, i-, sec- und tert-Butyl. Beispiele geeigneter Halogenatome sind Fluor, Chlor, Brom oder Iod.

Der aromatische Rest $R_A$ kann einen oder mehrere der erwähnten Substituenten pro Ring aufweisen; vorzugsweise ist er nicht substituiert. Wenn der Rest $R_A$ eine Gruppe der Formel IV darstellt, handelt es sich vorzugsweise um einen 4,4′-substituierten Rest.

Die für die Herstellung des Copolymers (A) der erfindungsgemässen Zusammensetzungen verwendeten aromatischen Dicarbonsäuren, aromatischen Hydroxycarbonsäuren oder die $\alpha,\omega$-dicarboxyterminierten Poly(oxyalkylene) können als freie Säuren oder als esterbildende Derivate der Säuren eingesetzt werden. Beispiele geeigneter esterbildender Derivate sind Anhydride, Säurehalogenide, wie Chloride oder Bromide, oder Nieder alkylester, z.B. $C_1$-$C_4$-Alkylester, der entsprechenden Säuren. Die entsprechenden Verbindungen und deren Veresterung sind dem Fachmann bekannt.

Die als Komponente (1.3) oder (2.3) eingesetzten aromatischen Hydroxycarbonsäuren sind vorzugsweise Verbindungen der Formel V

$HO\text{-}R_B\text{-}COOH$ (V),

worin $R_B$ für einen zweiwertigen ein- oder zweikernigen aromatischen Rest mit 6 bis 10 C-Atomen steht, der gegebenenfalls Halogen- oder $C_1$-$C_4$-Alkylsubstituenten aufweist, oder einen Rest der Formel VI bedeutet

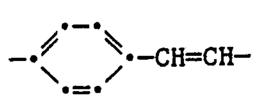

(VI),

wobei die Hydroxylgruppe der Hydroxycarbonsäure an den Phenylring gebunden ist (Zimtsäure). Für die Halogen- und $C_1$-$C_4$-Alkylsubstituenten am Rest $R_B$ gilt das beim Rest $R_A$ Gesagte.

Als Komponente (1.2) oder (2.3) eingesetzte aromatische Dicarbonsäuren sind vorzugsweise Verbindungen der Formel VII

$HOOC\text{-}R_C\text{-}COOH$ (VII),

worin $R_C$ die gleiche Bedeutung wie der Rest $R_A$ der Verbindungen der Formel (III) hat.

Beispiele geeigneter aromatischer Diole sind 1,2-, 1,3- und 1,4-Dihydroxybenzol, Dihydroxynaphthaline, wie z.B. 2,7-Dihydroxynaphthalin, 4,4′-Dihydroxybiphenyl, Bis(4-hydroxyphenyl)methan und 2,2-Bis(4-hydroxyphenyl)propan. Beispiele geeigneter aromatischer Hydroxycarbonsäuren sind 4-Hydroxybenzoesäure und Zimtsäure. Beispiele geeigneter aromatischer Dicarbonsäuren sind Isophthalsäure, Terephthalsäure, Phthalsäure, Naphthalindicarbonsäuren, wie z.B. 2,7-Naphthalindicarbonsäure, und 4,4′-Biphenyldicarbonsäure.

Die für die Herstellung der Polyester-Polyether-Copolymeren (A) am meisten bevorzugten aromatischen Diole der Formel III sind Verbindungen, worin der Rest $R_A$ 1,4- oder 1,3-Phenylen oder die Gruppe der Formel VIII

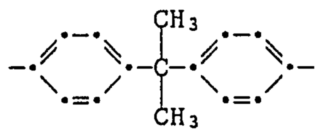

(VIII)

bedeutet.

Die am meisten bevorzugte aromatische Hydroxycarbonsäure der Formel V ist die Verbindung, bei der $R_B$ 1,4-Phenylen bedeutet, d.h. 4-Hydroxybenzoesäure.

Als aromatische Dicarbonsäuren werden Terephthalsäure und Isophthalsäure bzw. Gemische von beiden, d.h. Verbindungen der Formel VII, worin $R_C$ 1,4-oder 1,3-Phenylen ist, am meisten bevorzugt.

Die Komponenten (1.1) bis (1.3) und (2.1) bis (2.3) können als reine Verbindungen oder als Gemische solcher Verbindungen eingesetzt werden.

Die als Komponenten (1.1) bis (1.3) und (2.1) bis (2.3) verwendeten Verbindungen sind bekannt und im Handel erhältlich. Die Umsetzung solcher Verbindungen zu Polyestern und geeignete Verfahrensweisen, um Polymere mit bestimmten Molekulargewichtsverteilungen zu erhalten, sind dem Fachmann ebenso bekannt.

Einzelne der Polyester-Polyether-Copolymere (A) der erfindungsgemässen Zusammensetzungen oder verwandte Polymere sind bekannt und sind auf ihr flüssigkristallines Verhalten untersucht worden [vgl. z.B. British Polymer Journal, 1980, 132; Makromol. Chem. 187, 2317 (1986) und Makromol. Chem. 183, 2693 (1982)]. Der Einsatz solcher Copolymerer in ionenleitenden Zusammensetzungen ist noch nicht bekannt.

Als Komponente (A) der erfindungsgemässen Zusammensetzungen werden Copolymere mit einer Viskositätszahl (bestimmt in Tetrahydrofuran bei 30 °C) von grösser als 0,2, insbesondere grösser als 0,3 und am meisten solche mit einer Viskositätszahl von grösser als 0,4 bevorzugt. Bevorzugt werden auch Copolymere mit einem Polymerisationsgrad von grösser als 6, insbesondere grösser als 20, ganz besonders bevorzugt grösser als 30.

Bei der Synthese der Polyester-Polyether-Copolymeren werden die verwendeten Diole, Dicarbonsäuren und Hydroxycarbonsäuren bzw. deren esterbildende Derivate vorzugsweise in stöchiometrischen Mengen eingesetzt.

Gegenstand vorliegender Erfindung sind auch neue Polyester-PolyetherCopolymere hergestellt aus

(i) einem $\alpha,\omega$-dicarboxyterminierten Poly(oxyalkylen) der Formel II

$HOOC(CH_2OCH_2)_mCOOH$ (II),

worin m eine ganze Zahl von 2 - 200 bedeutet, oder deren esterbildenden Derivaten,

(ii) einem aromatische Diol und

(iii) einer aromatischen Dicarbonsäure, einer aromatischen Hydroxycarbonsäure oder deren esterbildenden Derivaten oder einem Gemisch dieser Verbindungen.

Bezüglich der bevorzugten Komponenten (i), (ii) und (iii) für die Herstellung der neuen erfindungsgemässen Polyester-Polyether-Copolymere gilt das bereits im Zusammenhang mit den Polyestern (A) der vorliegenden ionenleitenden Zusammensetzung Gesagte.

Das Elektrolytsalz (B) der erfindungsgemässen Zusammensetzungen ist ein Salz eines ein- bis dreiwertigen Metallions der Gruppen Ia bis IVa, Ib bis VIIb oder VIII. Aus Anwendungsgründen werden Salze bevorzugt, welche in polaren aprotischen Lösungsmitteln gut löslich sind (beispielsweise von etwa 0,5 mg/ml bis zu etwa 0,5 g/ml) und welche möglichst vollständig dissoziieren. Bevorzugt werden auch Salze von Kationen mit kleinem Radius, da diese von Polymeren besser komplexiert werden können, sowie solche mit sogenannten weichen Gegenionen.

Beispiele geeigneter Salze sind Alkalimetallsalze, wie Li-, Na-, K-, Rb-oder Cs-Salze, zweiwertige Salze, wie Mg-, Ca-, Ba-, Cu(II)-, Zn- oder Pb(II)-Salze, oder dreiwertige Salze, wie z.B. Eisen(III)-Salze, mit verschiedenen Gegenionen, wie z.B. $ClO_4^-$, $BF_4^-$, $CF_3SO_3^-$, $PF_6^-$, $Cl^-$, $Br^-$, $I^-$, $SCN^-$, $NO_3^-$ oder 7,7,8,8-Tetracyan-chinodimethan$^-$ ($TCNQ^-$).

Bevorzugte Salze (B) sind Salze von Metallionen der Gruppe Ia, IIa, VIII oder Ib. Besonders bevorzugt werden Kupfer-, Eisen-, Natrium- oder insbesondere Lithiumsalze. Beispiele geeigneter Salze sind $FeCl_3$,

$CuCl_2$, NaSCN, NaI, $LiO_3SCF_3$, LiTCNQ und insbesondere $LiClO_4$.

Die Mengen der Komponenten (A) und (B) der erfindungsgemässen Zusammensetzungen werden vorzugsweise so gewählt, dass pro Moläquivalent Ethersauerstoffatom des Polyether-Polyester-Copolymers (A) 0,01 bis 0,5, vorzugsweise 0,02 bis 0,2, besonders bevorzugt 0,03 bis 0,1 Mol des Salzes (B) vorliegen.

Als Komponenten (A) und (B) können auch Gemische verschiedener Copolymere bzw. Gemische verschiedener Metallsalze eingesetzt werden.

Bevorzugt werden im allgemeinen Zusammensetzungen, deren Leitfähigkeit mindestens $10^{-10}$ S $cm^{-1}$ beträgt.

Falls zweckmässig, können den erfindungsgemässen Zusammensetzungen auch eine oder mehrere Verbindungen mit einer hohen dielektrischen Konstante, zur Erhöhung der Dissoziation des Elektrolytsalzes und somit Erhöhung der Ionenleitfähigkeit, beigegeben werden, solange dadurch nicht andere wichtige Eigenschaften beeinträchtigt werden. Beispiele geeigneter Verbindungen mit einer hohen dielektrischen Konstante sind Dimethylformamid, Dimethylacetamid, Ethylencarbonat, Propylencarbonat, gammaButyrolacton oder Kronenetherverbindungen.

Die erfindungsgemässen ionenleitenden Zusammensetzungen können beispielsweise in einem gemeinsamen Lösungsmittel für die Komponenten (A) und (B) auf ein geeignetes Substrat appliziert werden. Nach Verdampfen des Lösungsmittels wird eine Schicht der ionenleitenden Zusammensetzung auf dem Substrat erhalten, welche, falls zweckmässig, als Folie vom Substrat abgezogen werden kann und gegebenenfalls zu einem Formkörper oder Prüfkörper verpresst werden kann. Geeignete gemeinsame Lösungsmittel sind z.B. Tetrahydrofuran, Methylenchlorid, Tetrachlorethan, Methanol, Aceton, Dimethylformamid oder Lösungsmittelgemische.

Die folgenden Beispiele erläutern die Erfindung.

## BEISPIELE

Die in den Beispielen angegebenen Molekulargewichte wurden gelpermeationschromatographisch ermittelt. Die verwendete Säule wurde mit Polystyrol geeicht.

Die verwendeten Chemikalien wurden auf folgende Weise vorbehandelt bzw. gereinigt:

Säurechloride $Cl\underset{\underset{O}{\|}}{C}R_C\underset{\underset{O}{\|}}{C}Cl$:

Terephthal- und Isophthalsäuredichlorid (Fluka, purum) wurden analog einer von H.W. Hässlin et al., Makromol. Chem. 181 (1980) 301 - 23 beschriebenen Methode nachchloriert und umkristallisiert.

Bisphenole $\overline{HOR_A}OH$: Bisphenol A (Fluka, purum) wurde in einem Wasser/Ethanol-Gemisch (Volumenverhältnis 5:7) umkristallisiert. Hydrochinon wurde bei 140°C und 20 mbar sublimiert. Resorcin (Fluka, puriss.) wurde im Vakuum bei 90°C getrocknet.

Diole $HO(CH_2CH_2O)_nH$: Es wurden technische Polyethylenglykole (Hoechst 600DAB8, Hoechst 400DAB8) und Tetraethylenglykol (Fluka, puriss.) verwendet. Die technischen Diole wurden azeotrop getrocknet, indem jeweils 100 g Diol mit 10 ml Benzol versetzt wurden und anschliessend das Benzol/Wasser-Gemisch bei Normaldruck und später bei reduziertem Druck abdestilliert wurde. Die Destillation endete bei 120°C und 0,1 Torr. Die Molekulargewichte der Diole betragen $\overline{M}_n$ = 530, $\overline{M}_w$ = 560 (Hoechst 400 DAB8) bzw. $\overline{M}_n$ = 790, $\overline{M}_w$ = 830 (Hoechst 600 DA8B).

Disäurechloride $Cl\underset{\underset{O}{\|}}{C}(CH_2OCH_2)_m\underset{\underset{O}{\|}}{C}Cl$:

Als Ausgangsprodukte dienten techn. Polyglykoldisäuren von Hoechst ( $\overline{M}_n$ = 510, $\overline{M}_w$ = 690, Säuregehalt 3,25 mol/kg). Aus den Disäuren wurden die Säurechloride hergestellt, indem 0,2 Mol Disäure auf 50°C erwärmt, und anschliessend 150 ml $SOCl_2$ zugetropft wurden. Dann wurde eine Stunde am Rückfluss gekocht, und überschüssiges $SOCl_2$ abdestilliert. Am Ende wurden noch 10 ml Toluol zugesetzt und wieder abdestilliert, um restliches $SOCl_2$ zu entfernen. Es blieb eine leicht trübe, gelbliche Flüssigkeit übrig, die direkt weiter verwendet wurde.

- Pyridin (Fluka, puriss.) und 1,1,2,2-Tetrachlorethan (Fluka, puriss.) wurden destilliert und über Molekularsieben getrocknet.
- Methylenchlorid (Fluka, puriss.) wurde über $P_2O_5$ destilliert.
- Tetrahydrofuran (Fluka, puriss.) wurde destilliert und über Natrium getrocknet.
- Dimethylformamid (Fluka, puriss.) wurde vor Gebrauch vakuumdestilliert.
- Lithiumperchlorat (Fluka, puriss.) wurde vor Gebrauch bei 100°C über Nacht im Vakuum getrocknet; alle anderen Elektrolytsalze (Fluka, puriss. bzw. Aldrich) wurden direkt verwendet. Lithium-Tetracyanochinodimethan (LiTCNQ) wurde nach Vorschrift in J. Am. Chem. Soc. 84 (1962)3374 hergestellt.

Beispiele 1 - 35: Synthese[1] von Copolyestern bestehend aus den Bausteinen $-OR_AO-$, $-O(CH_2CH_2O)_n-$ und $-\underset{\underset{O}{\|}}{C}R_C\underset{\underset{O}{\|}}{C}-$ in statistischer Abfolge.

[1] Die Synthese erfolgt analog einer Arbeitsvorschrift von J.-I. Jin et al., British Polymer Journal 1980, 132.

In einem Dreihalskolben mit Rührer, Tropftrichter und Gaseinleitungsrohr werden x[2] Mol $HOR_AOH$, y[2] Mol $HO(CH_2CH_2O)_nH$ und 25 ml Pyridin in 100 ml 1,1,2,2-Tetrachlorethan vorgelegt. Zu dieser Lösung wird innerhalb einer Stunde eine Lösung von (x + y)[2] Mol $Cl\underset{\underset{O}{\|}}{C}R_C\underset{\underset{O}{\|}}{C}Cl$ in 100 ml 1,1,2,2-Tetrachlorethan zugetropft. Anschliessend wird 20 Stunden gerührt und dann aufgearbeitet. Alle Prozeduren werden unter strengem Ausschluss von Feuchtigkeit ($N_2$-Spülung) durchgeführt.

[2] genaue Angaben über die eingesetzten Molzahlen s. Tabelle 1

Fällt das gebildete Polymere während der Reaktion aus, so wird die Mischung auf 100 °C erwärmt und noch 3 Stunden weitergerührt und anschliessend abgekühlt und aufgearbeitet.

Zur Aufarbeitung wird das Polymere im ca. 15 bis 20-fachen Volumen Methanol oder Aceton (s. Tab.) ausgefällt. Die Mischung wird noch zwei Stunden nachgerührt. Dann wird das Polymere abfiltriert, mit Methanol gewaschen und im Trockenschrank bei 80 °C und 6,65 kPa getrocknet.

Ist das Polymere flüssig, so wird nach dem Eintropfen der Polymerlösung in Methanol die überstehende Lösungsmittelphase vom Polymeren abdekantiert. Dann wird Methanol zugesetzt, ca. 30 Minuten gerührt und die Lösungsmittelphase abdekantiert. Das Polymere wird im Trockenschrank bei 80 °C und 6,65 kPa getrocknet. Charakteristische Daten der Polymeren sind in Tabelle 1 aufgelistet.

**Tabelle 1** Charakteristische Daten der Polyether-Polyester-Copolymeren bestehend aus den Bausteinen $-OR_AO-$, $-O(CH_2CH_2O)_n-$ und $-\underset{\underset{O}{\|}}{C}-R_C-\underset{\underset{O}{\|}}{C}-$ in statistischer Abfolge.

| Bsp. Nr. | Zusammensetzung des Polymeren in Mol $-OR_AO-$ | $-\underset{\underset{O}{\|}}{C}R_C\underset{\underset{O}{\|}}{C}-$ | | $-O(CH_2CH_2O)_n-$ | C,H-Analyse [%] | Ausbeute in [g] | [% d.Th.] | Ausgefällt in |
|---|---|---|---|---|---|---|---|---|
| | $R_A$ = 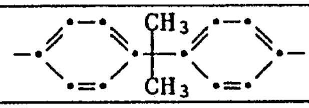 | $R_C$ = 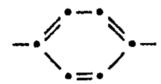 | | n = 4 | | | | |
| 1 | 0,09 | 0,1 | | 0,01 | ber. C 75,45 H 5,17<br>gef. C 74,39 H 5,19 | 35,7 | 100 | Methanol |
| 2 | 0,07 | 0,1 | | 0,03 | ber. C 72,10 H 5,38<br>gef. C 71,05 H 5,41 | 33,4 | 95,9 | Methanol |
| 3 | 0,05 | 0,1 | | 0,05 | ber. C 68,61 H 5,61<br>gef. C 68,88 H 5,63 | 33,7 | 79,0 | Aceton |
| 4 | 0,03 | 0,1 | | 0,07 | ber. C 64,98 H 5,85<br>gef. C 65,31 H 5,90 | 25,5 | 76,2 | Methanol |
| | $R_A$ = 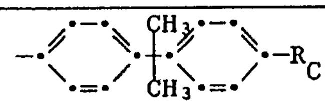 | $R_C$ = 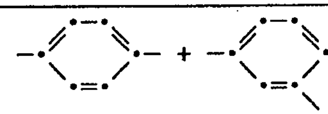 + | | n = 4 | | | | |
| 5 | 0,07 | 0,07 | 0,03 | 0,03 | ber. C 72,10 H 5,38<br>gef. C 72,26 H 5,37 | 29,1 | 83.5 | Aceton |
| 6 | 0,09 | 0,05 | 0,05 | 0,01 | ber. C 75,45 H 5,17<br>gef. C 73,92 H 5,17 | 31,6 | 88,9 | Aceton |
| 7 | 0,07 | 0,05 | 0,05 | 0,03 | ber. C 72,10 H 5,38<br>gef. C 72,28 H 5,33 | 19,3 | 55,4 | Aceton |
| 8 | 0,05 | 0,05 | 0,05 | 0,05 | ber. C 68,61 H 5,61<br>gef. C 68,47 H 5,43 | 44,2 | 86,3 | Methanol |
| 9 | 0,07 | 0,03 | 0,07 | 0,03 | ber. C 72,10 H 5,38<br>gef. C 72,56 H 5,29 | 28,1 | 80,6 | Aceton |

Tabelle 1 (Fortsetzung)

| Bsp. Nr. | Zusammensetzung des Polymeren in Mol $-OR_AO-$ | $-\underset{O}{\underset{\|}{C}}R_C\underset{O}{\underset{\|}{C}}-$ | | $-O(CH_2CH_2O)_n-$ | C,H-Analyse [%] | Ausbeute in [g] | [% d.Th.] | Ausgefällt in |
|---|---|---|---|---|---|---|---|---|
| | $R_A$ = 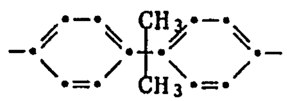 | $R_C$ = 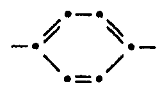 | | n ~ 9 | | | | |
| 10 | 0,07 | 0,1 | | 0,03 | ber. C 69,39 H 5,97<br>gef. C 69,40 H 5,95 | 36,7 | 89,2 | Aceton |
| 11 | 0,05 | 0,1 | | 0,05 | ber. C 65,28 H 6,45<br>gef. C 65,23 H 6,38 | 32,4 | 72,4 | Aceton |
| 12 | 0,03 | 0,1 | | 0,07 | ber. C 61,78 H 6,86<br>gef. C 61,26 H 6,85 | 39,3 | 81,4 | Methanol |
| 13 | 0,01 | 0,1 | | 0,09 | ber. C 58,75 H 7,21<br>gef. C 58,66 H 7,19 | 35,0 | 67,0 | Methanol |
| | $R_A$= 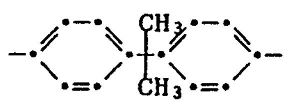 | $R_C$= 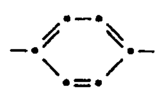 + | 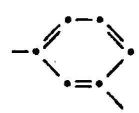 | n ~ 9 | | | | |
| 14 | 0,07 | 0,03 | 0,07 | 0,03 | ber. C 69,39 H 5,97<br>gef. C 68,49 H 5,92 | 33,7 | 91,6 | Aceton/ Methanol 1:1 |
| 15 | 0,09 | 0,05 | 0,05 | 0,01 | ber. C 74,28 H 5,39<br>gef. C 74,01 H 5,47 | 33,2 | 88,3 | Aceton |
| 16 | 0,07 | 0,05 | 0,05 | 0,03 | ber. C 69,39 H 5,97<br>gef. C 69,69 H 5,89 | 23,3 | 56,7 | Aceton |
| 17 | 0,05 | 0,05 | 0,05 | 0,05 | ber. C 65,28 H 6,45<br>gef. C 65,17 H 6,44 | 33,0 | 76,5 | Aceton/ Methanol 1:1 |
| 18 | 0,03 | 0,05 | 0,05 | 0,07 | ber. C 61,78 H 6,86<br>gef. C 61,95 H 6,89 | 24,2 | 50,1 | Methanol |

Tabelle 1 (Fortsetzung)

| Bsp. Nr. | Zusammensetzung des Polymeren in Mol -$OR_AO$- | 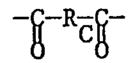 | | $-O(CH_2CH_2O)_n-$ | C,H-Analyse [%] | Ausbeute in [g] | [% d.Th.] | Ausgefällt in |
|---|---|---|---|---|---|---|---|---|
| | $R_A$ = 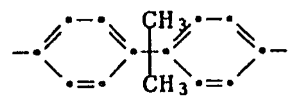 | $R_C$ = 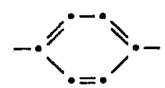 | | n ~ 13 | | | | |
| 19 | 0,07 | 0,1 | | 0,03 | ber. C 67,63 H 6,34<br>gef. C 67,50 H 6,34 | 41,4 | 88,6 | Aceton |
| 20 | 0,05 | 0,1 | | 0,05 | ber. C 63,44 H 6,91<br>gef. C 63,25 H 6,88 | 39,5 | 73,1 | Methanol |
| 21 | 0,03 | 0,1 | | 0,07 | ber. C 60,24 H 7,34<br>gef. C 59,97 H 7,36 | 41,5 | 67,8 | Methanol |
| | $R_A$= 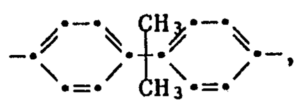, | $R_C$= 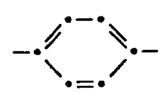 | + 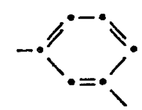 | n ~ 13 | | | | |
| 22 | 0,09 | 0,05 | 0,05 | 0,01 | ber. C 73,35 H 5,57<br>gef. C 72,86 H 5,54 | 36,3 | 92,0 | Aceton |
| 23 | 0,07 | 0,05 | 0,05 | 0,03 | ber. C 67,63 H 6,34<br>gef. C 67,60 H 6,35 | 38,6 | 82,7 | Aceton |
| 24 | 0,05 | 0,05 | 0,05 | 0,05 | ber. C 63,44 H 6,91<br>gef. C 62,65 H 6,77 | 51,0 | 95,0 | Methanol |
| 25 | 0,03 | 0,05 | 0,05 | 0,07 | ber. C 60,24 H 7,34<br>gef. C 60,41 H 7,40 | 22,9 | 74,9 | Methanol |
| 26 | 0,07 | 0,03 | 0,07 | 0,03 | ber. C 67,63 H 6,34<br>gef. C 66,78 H 6,26 | 24,2 | 51,7 | Aceton |

Tabelle 1 (Fortsetzung)

| Bsp. Nr. | Zusammensetzung des Polymeren in Mol $-OR_AO-$ | 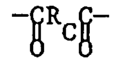 | | $-O(CH_2CH_2O)_n-$ | C,H-Analyse [%] | Ausbeute in [g] | [% d.Th.] | Ausgefällt in |
|---|---|---|---|---|---|---|---|---|
| | $R_A$ = 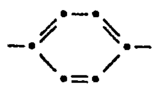 | $R_C$ = 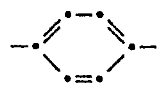 | | n ~ 13 | | | | |
| 27 | 0,07 | 0,1 | | 0,03 | ber. C 62,49 H 5,87<br>gef. C 61,72 H 5,90 | 36,3 | 94,3 | Methanol |
| 28 | 0,05 | 0,1 | | 0,05 | ber. C 59,99 H 6,71<br>gef. C 59,18 H 6,81 | 45,1 | 93,8 | Methanol |
| 29 | 0,03 | 0,1 | | 0,07 | ber. C 58,32 H 7,27<br>gef. C 57,21 H 7,25 | 47,9 | 83,1 | Methanol |
| 30 | 0,015 | 0,1 | | 0,085 | ber. C 57,40 H 7,58<br>gef. C 56,70 H 7,55 | 48,3 | 74,4 | Methanol |
| | $R_A$= 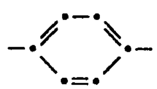 | $R_C$= 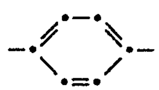 + | 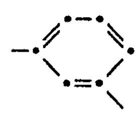 | n ~ 13 | | | | |
| 31 | 0,03 | 0,07 | 0,03 | 0,07 | ber. C 58,32 H 7,27<br>gef. C 57,21 H 7,04 | 47,8 | 82,9 | Methanol |
| 32 | 0,05 | 0,05 | 0,05 | 0,05 | ber. C 59,99 H 6,71<br>gef. C 59,36 H 6,69 | 43,5 | 90,4 | Methanol |
| 33 | 0,03 | 0,05 | 0,05 | 0,07 | ber. C 58,32 H 7,27<br>gef. C 58,12 H 7,22 | 45,5 | 78,9 | Methanol |

Tabelle 1 (Fortsetzung)

| Bsp. Nr. | Zusammensetzung des Polymeren in Mol: $-OR_AO-$ / 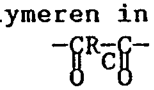 / $-O(CH_2CH_2O)_n-$ | C,H-Analyse [%] | Ausbeute in [g] | [% d. Th.] | Ausgefällt in |
|---|---|---|---|---|---|
| | $R_A$ = 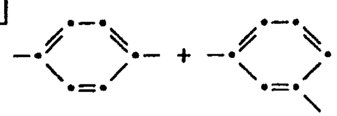 $R_C$ = 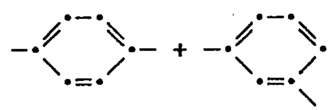 n ~ 13 | | | | |
| 34 | 0,025 0,025 0,05 0,05 0,05 | ber. C 59,99 H 6,71<br>gef. C 59,48 H 6,72 | 43,1 | 89,7 | Methanol |
| | $R_A$ = 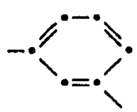 $R_C$ = 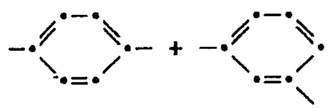 n ~ 13 | | | | |
| 35 | 0,05 0,05 0,05 0,05 | ber. C 59,99 H 6,71<br>gef. C 59,52 H 6,64 | 39,1 | 81,4 | Methanol |

Tabelle 1 (Fortsetzung): Physikalische Daten

| Bsp. Nr. | [η][1)] | $\bar{M}_n$ [2)] | $\bar{M}_w$ [2)] | Tg [°C] | TGA [°C] [3)] |
|---|---|---|---|---|---|
| 1 | unlöslich | - | - | - | 340 |
| 2 | 0,543 | 7600 | 29000 | 91 | 375 |
| 3 | 0,558 | 16000 | 85000 | 30 | 370 |
| 4 | 0,335 | 22000 | 39000 | 14 | 380 |
| 5 | 0,445 | 25000 | 49000 | 95 | 385 |
| 6 | 0,417 | 21000 | 37000 | 144 | 395 |
| 7 | 0,320 | 15000 | 25000 | 80 | 400 |
| 8 | 0,494 | 26000 | 50000 | 45 | 375 |
| 9 | 0,474 | 29000 | 64000 | 104 | 390 |
| 10 | 0,662 | 5600 | 49000 | 20 | 340 |
| 11 | 0,737 | 60000 | 111000 | -15 | 350 |
| 12 | 0,601 | 30000 | 85000 | -20 | 370 |
| 13 | 0,586 | 34000 | 81000 | -25 | 355 |
| 14 | 0,577 | 33000 | 81000 | - | 365 |
| 15 | 0,435 | 23000 | 51000 | 112 | 390 |
| 16 | 0,425 | 24000 | 48000 | 45 | 365 |
| 17 | 0,440 | 20000 | 52000 | 5 | 365 |
| 18 | 0,354 | 20000 | 39000 | -25 | 360 |
| 19 | 0,776 | 29000 | 128000 | -15 | 290 |
| 20 | 0,857 | 34000 | 124000 | -30 | 365 |
| 21 | 0,957 | 83000 | 234000 | -40 | 370 |
| 22 | 0,898 | 35000 | 102000 | 105 | 360 |
| 23 | 0,926 | 40000 | 116000 | 20 | 350 |
| 24 | 0,937 | 32000 | 113000 | -15 | 340 |
| 25 | 0,789 | 27000 | 79000 | -27 | 340 |
| 26 | 0,852 | 74000 | 137000 | 17 | 350 |
| 27 | - | unlöslich | in THF | -15 | 370 |
| 28 | - | unlöslich | in THF | -15 | 365 |
| 29 | 0,79 | 22000 | 128000 | -35 | 365 |
| 30 | 1,019 | 44000 | 98000 | -35 | 360 |
| 31 | 0,912 | 64000 | 130000 | -38 | 360 |
| 32 | 0,718 | unlöslich | in THF | -25 | 370 |
| 33 | 0,799 | 34000 | 108000 | < -10 | 365 |
| 34 | 0,636 | 20000 | 76000 | -30 | 375 |
| 35 | 0,589 | 27000 | 70000 | -25 | 365 |

1) gemessen in Tetrahydrofuran (THF)/1,1,2,2-Tetrachlorethan, 1:4, bei 30°C

2) gelpermeationschromatographisch bestimmt (stationäre Phase: Ultrastyragel mit Porendurchmesser $10^6$, $10^5$, $10^4$, $10^3$ Å; mobile Phase: THF, T = 22 ± 1°C, Flussrate 0,96 ml/min)

3) Thermogravimetrische Analyse: Angegeben ist die Temperatur, bei der der Gewichtsverlust 5 % beträgt.

**Beispiele 36 - 40: Synthese von Copolyestern bestehend aus den Bausteinen $-OR_AO-$, $-\underset{\underset{O}{\|}}{C}R_C\underset{\underset{O}{\|}}{C}-$ und $-\underset{\underset{O}{\|}}{C}(CH_2OCH_2)_m\underset{\underset{O}{\|}}{C}-$ in statistischer Abfolge**

Es wird wie unter Beispiel 1 - 5 beschrieben verfahren. In Abänderung werden $(x + y)^{3)}$Mol $HOR_AOH$ und 25 ml Pyridin in 100 ml 1,1,2,2-Tetrachlorethan (TCE) vorgelegt und $x^{3)}$ Mol $Cl\underset{\underset{O}{\|}}{C}R_C\underset{\underset{O}{\|}}{C}Cl$ + $y^{3)}$ Mol $Cl\underset{\underset{O}{\|}}{C}(CH_2OCH_2)_m\underset{\underset{O}{\|}}{C}Cl$ in 100 ml TCE zugetropft.

3) genaue Angaben über die eingesetzten Molzahlen z. Tabelle 2

Charakteristische Daten der Polymeren sind in Tab. 2 aufgelistet.

<u>Tabelle 2</u> Charakteristische Daten der Polyether-Polyester-Copolymeren bestehend aus den Bausteinen $-OR_AO-$, $-\underset{O}{\underset{\|}{C}}R_C\underset{O}{\underset{\|}{C}}-$ und $-\underset{O}{\underset{\|}{C}}(CH_2OCH_2)_m\underset{O}{\underset{\|}{C}}-$ in statistischer Abfolge

| Bsp. Nr. | Zusammensetzung des Polymeren in Mol $-OR_AO-$ | $-\underset{O}{\underset{\|}{C}}R_C\underset{O}{\underset{\|}{C}}-$ | $-\underset{O}{\underset{\|}{C}}(CH_2OCH_2)_m\underset{O}{\underset{\|}{C}}-$ | C,H-Analyse [%] | Ausbeute in [g] | [% d.Th.] | Ausgefällt in |
|---|---|---|---|---|---|---|---|
| | $R_A$ = 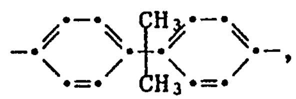, | $R_C$ = 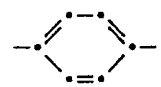 | m ~ 3 | | | | |
| 36 | 0,1 | 0,07 | 0,03 | ber. C 73,63 H 5,48<br>gef. C 72,74 H 5,49 | 35,5 | 93,0 | Aceton |
| 37 | 0,1 | 0,05 | 0,05 | ber. C 71,49 H 5,74<br>gef. C 70,76 H 5,73 | 29,6 | 74,4 | Aceton |
| | $R_A$ = 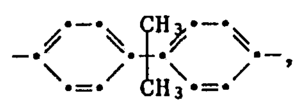, | $R_C$ = 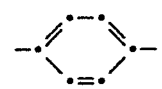 | m ~ 12 | | | | |
| 38 | 0,1 | 0,07 | 0,03 | ber. C 69,03 H 6,36<br>gef. C 68,90 H 6,35 | 45,4 | 91,9 | Aceton/ Methanol 1:1 |
| 39 | 0,1 | 0,05 | 0,05 | ber. C 65,74 H 6,90<br>gef. C 66,00 H 6,70 | 18,9 | 32,7 | Aceton/ Methanol 1:1 |
| 40 | 0,1 | 0,03 | 0,07 | ber. C 63,33 H 7,29<br>gef. C 62,82 H 7,20 | 20,3 | 60,9 | Aceton/ Methanol 1:1 |

Tabelle 2 (Fortsetzung): Physikalische Daten

| Bsp. Nr. | $[\eta]$ 1) | $\bar{M}_n$ 2) | $\bar{M}_w$ 2) | Tg [°C] |
|---|---|---|---|---|
| 36 | 0,510 | unlöslich in THF | | 50 |
| 37 | 0,538 | 6600 | 59000 | 54 |
| 38 | 0,651 | 13000 | 41000 | -14 |
| 39 | 0,562 | 13000 | 41000 | -19 |
| 40 | 0,511 | 22000 | 27000 | -23 |

1) gemessen in Tetrahydrofuran (THF) 1,1,2,2-Tetrachlorethan 1:4 bei 30°C

2) gelpermeationschromatographisch bestimmt (stat. Phase: Ultrastyragel mit Porendurchmesser $10^6$, $10^5$, $10^4$, $10^3$ Å; mobile Phase: THF, T = 22 ± 1°C, Flussrate 0.96 ml (min)

Beispiele 41 - 43: Synthese von Polyether-Polyester-Copolymeren bestehend aus den Bausteinen $-OR_B\underset{O}{\underset{\|}{C}}-$, $-\underset{O}{\underset{\|}{C}}R_C\underset{O}{\underset{\|}{C}}-$ und $-O(CH_2CH_2O)_n-$ in sequenzieller Abfolge $-\underset{O}{\underset{\|}{C}}R_BO-\underset{O}{\underset{\|}{C}}R_C\underset{O}{\underset{\|}{C}}-OR_B\underset{O}{\underset{\|}{C}}-O(CH_2CH_2O)_n-$

Es wird wie unter Beispiel 1 - 35 beschrieben verfahren. In Abänderung werden 0,1 Mol $HO(CH_2CH_2O)_nH$ und 25 ml Pyridin in 100 ml TCE vorgelegt und 0,1 Mol des Disäuredichlorids $Cl\underset{O}{\underset{\|}{C}}R_BO-\underset{O}{\underset{\|}{C}}R_C\underset{O}{\underset{\|}{C}}-OR_BCCl$[4) ]in 100 ml TCE zugetropft.

4) Als Disäuredichlorid wird ein 1:1-Gemisch der Substanzen mit

$R_B = R_C =$ 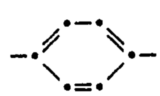 und

$R_B =$ 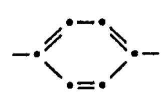, $R_C =$ 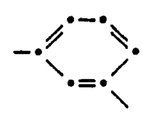 eingesetzt.

Diese Säurechloride werden nach der von G. Galli et al. in Makromol. Chem. 183 (1982) 2693 beschriebenen Methode hergestellt.

Charakteristische Daten der Polymeren sind in Tab. 3 aufgelistet.

Tabelle 3 Charakteristische Daten der Polyether-Polyester-Copolymeren

$$-\overset{}{\underset{O}{\underset{\|}{C}}}R_BO-\underset{O}{\underset{\|}{C}}R_C\underset{O}{\underset{\|}{C}}-OR_B\underset{O}{\underset{\|}{C}}-O(CH_2CH_2O)_n-$$

| Bsp. Nr. | $R_B$ | $R_C$ | n | C,H-Analyse | Ausbeute in [g] [% d. Th.] | ausgefällt in |
|---|---|---|---|---|---|---|
| 41 | 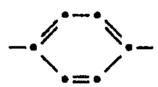 | 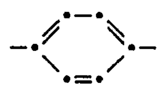 + 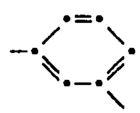 (1:1) | 4 | ber. C 63,83 H 5,00<br>gef. C 63,40 H 5,03 | 6,6 58,6 | Aceton/ Wasser 3:1 |
| 42 | 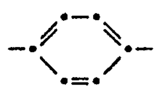 | 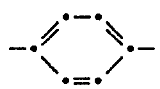 + 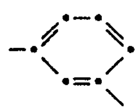 (1:1) | ~ 9 | ber. C 61,29 H 6,13<br>gef. C 58,91 H 6,07 | 9,8 63,3 | Methanol |
| 43 | 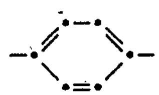 | 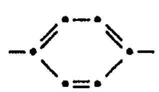 + 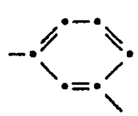 (1:1) | ~ 13 | ber. C 59,99 H 6,71<br>gef. C 59,46 H 6,86 | 10,9 59,2 | Methanol |

Tabelle 3 (Fortsetzung): Physikalische Daten

| Bsp. Nr. | [η] 1) | $\bar{M}_n$ 2) | $\bar{M}_w$ 2) | Tg [°C] | TGA 3) [°C] |
|---|---|---|---|---|---|
| 41 | 0,25 | 10000 | 16000 | 35 | 370 |
| 42 | 0,21 | 6700 | 11000 | -17 | 365 |
| 43 | 0,26 | 6900 | 16000 | -27 | 375 |

1) gemessen in Tetrahydrofuran (THF)/1,1,2,2-Tetrachlorethan, 1:4, bei 30°C

2) gelpermeationschromatographisch bestimmt (stationäre Phase: Ultrastyragel mit Porendurchmesser $10^6$, $10^5$, $10^4$, $10^3$ Å; mobile Phase: THF, T = 22 ± 1°C, Flussrate 0,96 ml/min)

3) Thermogravimetrische Analyse: Angegeben ist die Temperatur, bei der der Gewichtsverlust 5 % beträgt.

Beispiele A1 - A52: Komplexierung der Polymeren mit $LiClO_4$ und Messung ihrer elektrischen Leitfähigkeit

Die Komplexierung der Polymeren mit $LiClO_4$ erfolgte nach drei verschiedenen Verfahren:

A) 2 g des Polymeren werden in 15 ml trockenem THF gelöst und mit festem $LiClO_4$ im Molverhältnis von $Li^+$ zu $-CH_2CH_2O$-Einheiten von 1:50 bis 1:5 versetzt. Sofort nach Salzzugabe entsteht eine klare Lösung, die ca. 5 min. gerührt wird. Danach wird die Lösung auf eine Glasplatte gegeben (76 x 26 x 1 mm) und mit einer 100 µ-Rakel verteilt. Zur Trocknung werden die beschichteten Glasplatten zunächst für 30 min bei Raumtemperatur in einer über $P_2O_5$ getrockneten $N_2$-Atmosphäre aufbewahrt. Anschliessend werden sie über Nacht in einem Exsikkator bei 50° C und 0,1 mbar gelagert. Danach wird der entstandene Film abgekratzt und zu einer Pille verpresst. An dieser Pille wird die spezifische Leitfähigkeit bei 20° C und 100° C gemessen.

B) 2,4 g des Polymeren werden in ca. 20 ml $CH_2Cl_2$ gelöst und mit 3 ml THF versetzt. Dann wird festes $LiClO_4$ in Li/-$CH_2CH_2O$-Verhältnissen von 1:30 bis 1:5 zugesetzt. Die weitere Behandlung erfolgt wie unter (A) beschrieben.

C) 4 g des Polymeren werden in 10 ml TCE gelöst und mit 3 ml THF versetzt. Dann wird festes $LiClO_4$ in Li/-$CH_2CH_2O$-Verhältnissen von 1:30 bis 1:5 zugesetzt. Die weitere Behandlung erfolgt wie unter (A) beschrieben. In Abänderung werden die Filme bei 70° C und 50 mbar getrocknet.

In Tabelle 4 sind die Zusammensetzungen und Leitfähigkeiten einiger Polymer-$LiClO_4$-Komplexe aufgelistet.

Tabelle 4 Zusammensetzungen und Leitfähigkeiten σ einiger Polymer-$LiClO_4$-Komplexe

| Bsp. Nr. | Polymer aus Beispiel | Komplexierungsverfahren | Molverhältnis $Li^+/-CH_2CH_2O-$ | $\sigma_{20°C}$ [$S\ cm^{-1}$] | $\sigma_{100°C}$ [$S\ cm^{-1}$] |
|---|---|---|---|---|---|
| A1 | 3 | A | 0,20 | $1,3 \times 10^{-7}$ | - |
| A2 | 10 | B | 0,20 | $1,8 \times 10^{-7}$ | $4,6 \times 10^{-6}$ |
| A3 | 10 | B | 0,10 | $2,7 \times 10^{-9}$ | - |
| A4 | 11 | B | 0,20 | $3,6 \times 10^{-7}$ | $1,6 \times 10^{-6}$ |
| A5 | 11 | B | 0,07 | $3,4 \times 10^{-8}$ | $1,0 \times 10^{-6}$ |
| A6 | 11 | B | 0,05 | $1,2 \times 10^{-8}$ | $2,4 \times 10^{-7}$ |
| A7 | 11 | B | 0,04 | $2,0 \times 10^{-8}$ | $2,8 \times 10^{-7}$ |
| A8 | 11 | B | 0,033 | $2,2 \times 10^{-8}$ | $2,2 \times 10^{-7}$ |
| A9 | 17 | A | 0,20 | $2,0 \times 10^{-7}$ | $4,3 \times 10^{-6}$ |
| A10 | 17 | A | 0,10 | $5,7 \times 10^{-9}$ | $2,8 \times 10^{-8}$ |
| A11 | 17 | A | 0,07 | $5,5 \times 10^{-9}$ | $1,2 \times 10^{-7}$ |
| A12 | 17 | A | 0,05 | $5,5 \times 10^{-9}$ | $1,5 \times 10^{-7}$ |
| A13 | 17 | A | 0,035 | $5,6 \times 10^{-9}$ | $4,4 \times 10^{-8}$ |
| A14 | 19 | B | 0,20 | $1,1 \times 10^{-7}$ | $1,2 \times 10^{-5}$ |
| A15 | 19 | B | 0,10 | $2,3 \times 10^{-8}$ | $4,8 \times 10^{-7}$ |
| A16 | 19 | B | 0,07 | $1,2 \times 10^{-8}$ | $1,2 \times 10^{-7}$ |
| A17 | 19 | B | 0,04 | $3,7 \times 10^{-9}$ | $8,6 \times 10^{-9}$ |
| A18 | 19 | B | 0,035 | $7,3 \times 10^{-9}$ | $7,8 \times 10^{-9}$ |
| A19 | 23 | A | 0,20 | $7,5 \times 10^{-8}$ | $2,4 \times 10^{-6}$ |
| A20 | 23 | A | 0,10 | $2,1 \times 10^{-8}$ | $1,2 \times 10^{-6}$ |
| A21 | 23 | A | 0,07 | $4,5 \times 10^{-9}$ | $2,0 \times 10^{-7}$ |
| A22 | 23 | A | 0,05 | $1,1 \times 10^{-9}$ | $2,0 \times 10^{-7}$ |
| A23 | 23 | A | 0,04 | $1,4 \times 10^{-9}$ | $2,5 \times 10^{-8}$ |
| A24 | 24 | A | 0,05 | $1,1 \times 10^{-7}$ | $2,5 \times 10^{-7}$ |
| A25 | 24 | A | 0,04 | $1,1 \times 10^{-7}$ | $5,8 \times 10^{-7}$ |
| A26 | 24 | A | 0,035 | $1,2 \times 10^{-7}$ | $5,1 \times 10^{-7}$ |
| A27 | 26 | A | 0,20 | $1,3 \times 10^{-7}$ | $3,3 \times 10^{-6}$ |
| A28 | 26 | A | 0,10 | $1,4 \times 10^{-8}$ | $1,0 \times 10^{-6}$ |
| A29 | 26 | A | 0,07 | $2,9 \times 10^{-9}$ | $3,8 \times 10^{-8}$ |
| A30 | 26 | A | 0,05 | $1,5 \times 10^{-9}$ | $1,4 \times 10^{-8}$ |

Tabelle 4 (Fortsetzung)

| Bsp. Nr. | Polymer aus Beispiel | Komplexierungsverfahren | Molverhältnis $Li^+/-CH_2CH_2O-$ | $\sigma_{20°C}$ [$S\ cm^{-1}$] | $\sigma_{100°C}$ [$S\ cm^{-1}$] |
|---|---|---|---|---|---|
| A31 | 31 | A* | 0,10 | $3,0 \times 10^{-7}$ | $4,8 \times 10^{-6}$ |
| A32 | 31 | A* | 0,07 | $3,8 \times 10^{-7}$ | $5,2 \times 10^{-6}$ |
| A33 | 31 | A* | 0,05 | $3,8 \times 10^{-7}$ | $5,5 \times 10^{-6}$ |
| A34 | 31 | A* | 0,04 | $6,6 \times 10^{-7}$ | $2,8 \times 10^{-6}$ |
| A35 | 31 | A* | 0,033 | $5,1 \times 10^{-7}$ | $7,0 \times 10^{-6}$ |
| A36 | 31 | A* | 0,02 | $3,6 \times 10^{-7}$ | $3,4 \times 10^{-6}$ |
| A37 | 33 | A | 0,10 | $2,0 \times 10^{-7}$ | $5,0 \times 10^{-6}$ |
| A38 | 33 | A | 0,07 | $1,3 \times 10^{-7}$ | $2,3 \times 10^{-6}$ |
| A39 | 33 | A | 0,05 | $9,8 \times 10^{-8}$ | $1,8 \times 10^{-6}$ |
| A40 | 33 | A | 0,04 | $1,4 \times 10^{-7}$ | $2,3 \times 10^{-6}$ |
| A41 | 33 | A | 0,033 | $1,6 \times 10^{-7}$ | $2,9 \times 10^{-6}$ |
| A42 | 33 | A | 0,02 | $5,4 \times 10^{-8}$ | $6,6 \times 10^{-6}$ |
| A43 | 38 | C | 0,20 | $9,3 \times 10^{-8}$ | $1,1 \times 10^{-5}$ |
| A44 | 38 | C | 0,10 | $8,0 \times 10^{-9}$ | $4,1 \times 10^{-7}$ |
| A45 | 38 | C | 0,07 | $4,0 \times 10^{-9}$ | $4,3 \times 10^{-8}$ |
| A46 | 39 | B | 0,20 | $3,0 \times 10^{-7}$ | $3,2 \times 10^{-6}$ |
| A47 | 39 | B | 0,10 | $3,9 \times 10^{-8}$ | $2,7 \times 10^{-6}$ |
| A48 | 39 | B | 0,07 | $5,7 \times 10^{-8}$ | $7,1 \times 10^{-7}$ |
| A49 | 39 | B | 0,05 | $3,0 \times 10^{-8}$ | $8,6 \times 10^{-6}$ |
| A50 | 39 | B | 0,04 | $2,4 \times 10^{-8}$ | $1,9 \times 10^{-6}$ |
| A51 | 39 | B | 0,035 | $2,3 \times 10^{-8}$ | $2,4 \times 10^{-5}$ |
| A52 | 41 | B | 0,20 | $1,3 \times 10^{-7}$ | $1,3 \times 10^{-6}$ |

*Lösungsmittel: Tetrahydrofuran/Methylenchlorid 4:1

Beispiele A53-A56: Komplexierung der Polymeren mit $CuCl_2$ und Messung der spezifischen Leitfähigkeit $\sigma$

1,4 g des Polymeren aus Beispiel 23 werden in 5 ml TCE gelöst und mit 2 ml Methanol versetzt. Nach ca. 30-minütigem Rühren wird eine klare Lösung erhalten. Zu dieser Lösung wird wasserfreies $CuCl_2$ in Mol verhältnissen von $Cu^{2+}$ zu $-CH_2CH_2O$-Einheiten von 1:60 bis 1:6 zugesetzt. Nach kurzer Zeit hat sich das $CuCl_2$ gelöst. Die Lösung wird nun auf Glasplatten (76 x 26 x 1 mm) gegossen und mit einer 100 µ-Rakel verteilt. Zur Trocknung werden die beschichteten Glasplatten im Exsikkator zunächst für ca. 30 min bei 80° C und 50 mbar und dann über Nacht bei 80° C und 0,1 mbar getrocknet. Danach wird der entstandene Film abgekratzt und zu einer Pille verpresst. An dieser Pille wird die spezifische Leitfähigkeit bei 20° C und 100° C gemessen. Zusammensetzung und Leitfähigkeit der Polymer-$CuCl_2$-Komplexe sind in Tabelle 5 aufgelistet.

Tabelle 5

| Zusammensetzungen und Leitfähigkeiten σ einiger Polymer-$CuCl_2$-Komplexe | | | |
|---|---|---|---|
| Bsp. Nr. | Molverhältnis $Cu^{2+}$/-$CH_2CH_2O$ | σ 20 °C [S $cm^{-1}$] | σ100 °C [S $cm^{-1}$] |
| A53 | 0,09 | 3,8 x $10^{-9}$ | 1,4 x $10^{-5}$ |
| A54 | 0,05 | 2,9 x $10^{-9}$ | 6,8 x $10^{-6}$ |
| A55 | 0,03 | 1,5 x $10^{-9}$ | 4,8 x $10^{-6}$ |
| A56 | 0,02 | 2,5 x $10^{-9}$ | 8,9 x $10^{-7}$ |

Beispiele A57 - A58: Komplexierung der Polymeren mit $FeCl_3$ und Messung der spezifischen Leitfähigkeit σ

1,4 g des Polymeren aus Beispiel 23 werden in 5 ml TCE gelöst und mit 2 ml Methanol versetzt. Zu dieser Lösung wird wasserfreies $FeCl_3$ im Molverhältnis von $Fe^{3+}$ zu -$CH_2CH_2O$-Einheiten von 1:50 bis 1:5 zugesetzt. Die weitere Behandlung erfolgt wie in Beispielen A53 - A56 beschrieben. Zusammensetzung und Leitfähigkeit der Polymer-$FeCl_3$-Komplexe sind in Tabelle 6 aufgelistet.

Tabelle 6

| Zusammensetzungen und Leitfähigkeiten σ einiger Polymer-$FeCl_3$-Komplexe | | |
|---|---|---|
| Bsp. Nr. | Molverhältnis $Fe^{3+}$/-$CH_2CH_2O$- | σ100 °C [S $cm^{-1}$] |
| A57 | 0,20 | 6,2 x $10^{-6}$ |
| A58 | 0,02 | 2,2 x $10^{-6}$ |

Beispiele A59 - A61: Komplexierung der Polymeren mit NaSCN und Messung der spezifischen Leitfähigkeit σ

2,4 g des Polymeren aus Beispiel 23 werden in 10 ml TCE gelöst und mit 4 ml Aceton versetzt. Zu dieser Lösung wird NaSCN im Molverhältnis von $Na^+$ zu -$CH_2CH_2O$- Einheiten von 1:50 bis 1:5 zugesetzt. Die weitere Behandlung erfolgt wie für Beispiele A53 - A56 beschrieben. Zusammensetzung und Leitfähigkeit der Polymer-NaSCN-Komplexe sind in Tabelle 7 aufgelistet.

Tabelle 7

| Zusammensetzungen und Leitfähigkeiten σ einiger Polymer-NaSCN-Komplexe | | | |
|---|---|---|---|
| Bsp. Nr. | Molverhältnis $Na^+$/-$CH_2CH_2O$- | σ20 °C [S $cm^{-1}$] | σ100 °C [S $cm^{-1}$] |
| A59 | 0,20 | $3,2 \times 10^{-9}$ | $9,8 \times 10^{-7}$ |
| A60 | 0,09 | $1,4 \times 10^{-8}$ | $8,3 \times 10^{-7}$ |
| A61 | 0,05 | $1,2 \times 10^{-9}$ | $5,9 \times 10^{-7}$ |

Beispiel A62 - A64: Komplexierung der Polymeren mit NaI und Messung der spezifischen Leitfähigkeit σ

1,8 g des Polymeren aus Beispiel 26 werden in 15 ml THF gelöst und mit 6 ml Aceton versetzt. Zu dieser Lösung wird NaI im Molverhältnis von $Na^+$ zu -$CH_2CH_2O$-Einheiten von 1:50 bis 1:5 zugesetzt. Die weitere Behandlung erfolgt wie für Beispiele A1 - A52 beschrieben. Zusammensetzung und Leitfähigkeit der Polymer-NaI-Komplexe sind in Tab. 8 aufgelistet.

Tabelle 8

| Zusammensetzungen und Leitfähigkeiten σ einiger Polymer-NaI-Komplexe | | | |
|---|---|---|---|
| Bsp. Nr. | Molverhältnis $Na^+$/-$CH_2CH_2O$- | σ20 °C [S $cm^{-1}$] | σ100 °C [S $cm^{-1}$] |
| A62 | 0,20 | $6,4 \times 10^{-7}$ | $1,8 \times 10^{-5}$ |
| A63 | 0,10 | $1,0 \times 10^{-8}$ | $8,6 \times 10^{-7}$ |
| A64 | 0,07 | $1,3 \times 10^{-9}$ | $5,8 \times 10^{-7}$ |

Beispiele A65 - A68: Komplexierung der Polymeren mit LiTCNQ und Messung der spezifischen Leitfähigkeit σ

1,2 g des Polymeren aus Beispiel 23 werden in 10 ml Dimethylformamid gelöst. Zu dieser Lösung wird LiTCNQ im Molverhältnis von $Li^+$ zu -$CH_2CH_2O$-Einheiten von 1:30 bis 1:5 zugesetzt. Die weitere Behandlung erfolgt wie für Beispiele A1 - A52 beschrieben. Zur Trocknung werden die beschichteten Glasträger 1,5 Stunden unter $N_2$ bei Raumtemperatur aufbewahrt und anschliessend über Nacht bei 50 °C und 0,1 mbar im Exsikkator gelagert. Zusammensetzung und Leitfähigkeit der PolymerLiTCNQ-Komplexe sind in Tabelle 9 aufgelistet.

Tabelle 9

| Zusammensetzungen und Leitfähigkeiten σ einiger Polymer-$Li^+TCNQ^-$-Komplexe | | |
|---|---|---|
| Bsp. Nr. | Molverhältnis $Li^+$/-$CH_2CH_2O$- | σ100 °C [S $cm^{-1}$] |
| A65 | 0,20 | 1,7 x $10^{-6}$ |
| A66 | 0,10 | 2,3 x $10^{-7}$ |
| A67 | 0,05 | 2,8 x $10^{-7}$ |
| A68 | 0,03 | 3,2 x $10^{-7}$ |

Beispiele A69 - A73: Komplexierung der Polymeren mit $LiCF_3SO_3$ und Messung der spezifischen Leitfähigkeit σ

1,2 g des Polymeren aus Beispiel 23 werden in 10 ml THF gelöst. Zu dieser Lösung wird festes $LiCF_3SO_3$ im Molverhältnis von $Li^+$ zu -$CH_2CH_2O$-Einheiten vom 1:50 bis 1:10 zugesetzt. Die weitere Behandlung erfolgt wie für Bespiele A53 - A56 beschrieben. Zusammensetzung und Leitfähigkeit der Polymer-$LiCF_3SO_3$-Komplexe sind in Tab. 10 aufgelistet.

Tabelle 10

| Zusammensetzungen und Leitfähigkeiten σ einiger Polymer-$LiCF_3SO_3$-Komplexe | | | |
|---|---|---|---|
| Bsp. Nr. | Molverhältnis $Li^+$/-$CH_2CH_2O$- | σ20 °C [S $cm^{-1}$] | σ100 °C [S $cm^{-1}$] |
| A69 | 0,10 | 2,2 x $10^{-7}$ | 4,0 x $10^{-6}$ |
| A70 | 0,07 | 2,2 x $10^{-7}$ | 1,5 x $10^{-6}$ |
| A71 | 0,05 | 8,2 x $10^{-8}$ | 7,9 x $10^{-7}$ |
| A72 | 0,04 | 1,9 x $10^{-8}$ | 6,2 x $10^{-7}$ |
| A73 | 0,02 | 6,7 x $10^{-9}$ | 2,4 x $10^{-7}$ |

Beispiel B1: Untersuchung der mechanischen Eigenschaften im Dehnversuch

Es werden zunächst Polymerlösungen in einem Lösungsmittelgemisch aus 7 Volumenteilen 1,1,2,2-Tetrachlorethan und 3 Volumenteilen Tetrahydrofuran hergestellt (Konzentration 0,3 g Polymer/ml) und gegebenenfalls mit $LiClO_4$ in Molverhältnissen $Li^+$/-$CH_2CH_2O$- von 1:10 bis 1:50 versetzt. Diese Lösungen werden unter Verwendung einer 220 µ-Rakel zu Filmen auf Glasplatten (200 x 200 mm) vergossen. Nach dem Trocknen (30 min bei 50 °C, dann 48 Stunden bei 80 °C im Vakuum) werden die Glasplatten auf ca. 5 °C abgekühlt und die Filme als selbsttragende Folien abgezogen. Von den Folien werden Prüfkörper (Länge 25 mm, Breite 6 mm, Dicke 30 µm) angefertigt und im Dehnungsversuch (Apparatur Zwick, Modell 1445) bei 20 °C auf ihre mechanischen Eigenschaften untersucht. Die Ergebnisse sind in Tabelle 11 aufgelistet.

Tabelle 11

| Mechanische Eigenschaften der Polymeren | | | | |
|---|---|---|---|---|
| Polymer aus Bsp. | $Li^+$/-$CH_2CH_2O$- | E-Modul [N/mm²] | Bruchfestigkeit [N/mm²] | Bruchdenung [%] |
| 2 | - | 2100 | 30 | 1,3 |
| 3 | - | 1900 | 38 | 3,5 |
| 6 | - | 2200 | 51 | 2,8 |
| 8 | - | 2400 | 41 | 1,7 |
| 10 | - | 540 | 28 | 116 |
| 11 | - | 63 | 7,7 | 278 |
| 15 | - | 2100 | 31 | 1,4 |
| 19 | - | 138 | 23 | 225 |
| 22 | - | 1600 | 38 | 14 |
| 23 | 0,02 | 67 | 37 | 305 |
| 23 | 0,03 | 158 | 42 | 280 |
| 23 | 0,05 | 192 | 27 | 228 |
| 23 | 0,07 | 195 | 43 | 238 |
| 23 | 0,10 | 306 | 23 | 161 |

## Ansprüche

1. Ionenleitende Zusammensetzungen enthaltend
(A) ein Polyester-Polyether-Copolymer hergestellt aus
(1.1) einem α,ω-dihydroxyterminierten Poly(oxyalkylen),
(1.2) einer aromatischen Dicarbonsäure oder deren esterbildenden Derivaten und
(1.3) einem aromatischen Diol oder einer aromatischen Hydroxycarbonsäure oder deren esterbildenden Derivaten oder einem Gemisch dieser Verbindungen oder hergestellt aus
(2.1) einem α,ω-dicarboxyterminierten Poly(oxyalkylen) oder dessen esterbildenden Derivaten,
(2.2) einem aromatischen Diol und
(2.3) einer aromatischen Dicarbonsäure, einer aromatischen Hydroxycarbonsäure oder deren esterbildenden Derivaten oder einem Gemisch dieser Verbindungen und
(B) ein Salz eines ein- bis dreiwertigen Metallions der Gruppen Ia bis IVa, Ib bis VIIb oder VIII.

2. Zusammensetzung nach Anspruch 1, worin die Mengen der Komponenten (1.1) bis (1.3) so gewählt werden, dass 5 - 95, vorzugsweise 10 - 90, besonders bevorzugt 25 - 75 % der OH-Gruppen von der Komponente (1.1) und die restlichen OH-Gruppen von der Komponente (1.3) stammen.

3. Zusammensetzung nach Anspruch 1, worin die Mengen der Komponenten (2.1) bis (2.3) so gewählt werden, dass 5 - 95, vorzugsweise 10 - 90, besonders bevorzugt 25 - 75 % der COOH-Gruppen von der Komponente (2.1) und die restlichen COOH-Gruppen von der Komponente (2.3) stammen.

4. Zusammensetzung nach Anspruch 1, worin das Poly(oxyalkylen) (1.1) oder (2.1) von einem Polyethylenglykol, einem Polypropylenglykol oder einem Polytetrahydrofuran abgeleitet ist.

5. Zusammensetzung nach Anspruch 4, worin die Komponente (1.1) eine Verbindung der Formel I und die Komponente (1.2) eine Verbindung der Formel II ist

$HO\text{-}\!\!\left(CH_2CH_2O\right)_{\overline{n}} H$ (I)

$HOOC\text{-}\!\!\left(CH_2OCH_2\right)_{\overline{m}} COOH$ (II),

worin m und n eine ganze Zahl von 2 bis 200, vorzugsweise 3 bis 20, besonders bevorzugt 3 bis 15, bedeuten.

6. Zusammensetzung nach Anspruch 1, worin das als Komponente (1.3) oder (2.2) eingesetzte aromatische Diol eine Verbindung der Formel III ist

$HO\text{-}R_A\text{-}OH$ (III),

worin $R_A$ für einen zweiwertigen ein- oder zweikernigen aromatischen Rest mit 6 bis 10 C-Atomen steht, der gegebenenfalls durch Halogenatome, $C_1$-$C_4$-Alkylgruppen, Phenyl, $C_1$-$C_4$-Alkylphenyl oder Halogenphenyl substituiert ist, oder eine Gruppe der Formel IV darstellt

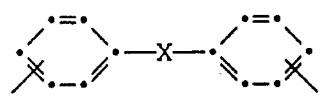

(IV),

worin X eine direkte Bindung, Methylen, Isopropyliden, O, CO, S, $SO_2$ CH=CR[1], C≡C N=N, N $\overset{O}{=}$ N, CH=CH- $\underset{O}{C}$ oder CH=CH- $\underset{O}{C}$ -CH=CH bedeutet, und $R^1$ für Wasserstoff, Halogen oder $C_1$-$C_4$-Alkyl steht.

7. Zusammensetzung nach Anspruch 1, worin die als Komponente (1.3) oder (2.3) eingesetzte aromatische Hydroxycarbonsäure eine Verbindung der Formel V ist

HO-$R_B$-COOH (V),

worin $R_B$ für einen zweiwertigen ein- oder zweikernigen aromatischen Rest mit 6 bis 10 C-Atomen steht, der gegebenenfalls Halogen- oder $C_1$-$C_4$-Alkylsubstituenten aufweist, oder einen Rest der Formel VI bedeutet

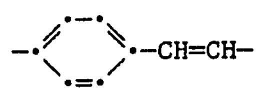

(VI),

wobei die Hydroxylgruppe der Hydroxycarbonsäure an den Phenylring gebunden ist.

8. Zusammensetzung nach Anspruch 1, worin die als Komponente (1.2) oder (2.3) eingesetzte aromatische Dicarbonsäure eine Verbindung der Formel VII ist

HOOC-$R_C$-COOH (VII),

worin $R_C$ die für den Rest $R_A$ im Anspruch 6 angegebene Bedeutung hat.

9. Zusammensetzung nach den Ansprüchen 6 bis 8, worin der Rest $R_A$ 1,4- oder 1,3-Phenylen oder die Gruppe der Formel VIII bedeutet

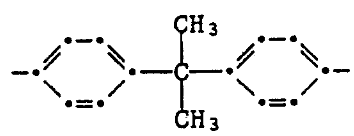

(VIII),

$R_B$ 1,4-Phenylen ist, und $R_C$ 1,4- oder 1,3-Phenylen ist.

10. Zusammensetzung nach Anspruch 1, worin das Salz (B) ein Salz eines Metallions der Gruppe Ia, IIa, Ib oder VIII ist.

11. Zusammensetzung nach Anspruch 10, worin das Salz ein Kupfer-, Eisen-, Natrium- oder insbesondere Lithiumsalz ist.

12. Zusammensetzung nach Anspruch 11, worin das Salz Lithiumperchlorat ist.

13. Zusammensetzung nach Anspruch 1, worin die Menge der Komponenten (A) und (B) so gewählt wird, dass pro Moläquivalent Ethersauerstoffatom des Polyether-Polyester-Copolymers (A) 0,01 bis 0,5, vorzugsweise 0,02 bis 0,2, besonders bevorzugt 0,03 bis 0,1 Mol des Salzes (B) vorliegen.

14. Zusammensetzung nach Anspruch 1, deren Ionenleitfähigkeit mindestens $10^{-10}$ S $cm^{-1}$ beträgt.

15. Verwendung der Zusammensetzung nach Anspruch 1 zur Herstellung von antistatischen Folien, antistatisch wirksamen Beschichtungen oder als Feststoffelektrolyt für Batterien.

16. Polyester-Polyether-Copolymer hergestellt aus (i) einer α,ω-dicarboxyterminierten Poly(oxyalkylen) Verbindung der Formel II

$HOOC(CH_2OCH_2)_{\overline{m}}COOH$ (II),

worin m eine ganze Zahl von 2 - 200 bedeutet, oder deren esterbildenden Derivaten,

(ii) einem aromatischen Diol und

(iii) einer aromatischen Dicarbonsäure, einer aromatischen Hydroxycarbonsäure oder deren esterbildenden Derivaten oder einem Gemisch dieser Verbindungen.